(19) Europäisches Patentamt
European Patent Office
Office européen des brevets

(11) **EP 3 427 417 B1**

(12) **EUROPEAN PATENT SPECIFICATION**

(45) Date of publication and mention
of the grant of the patent:
**11.05.2022   Bulletin 2022/19**

(21) Application number: **17762635.5**

(22) Date of filing: **07.03.2017**

(51) International Patent Classification (IPC):
*H04B 17/11* (2015.01)   *H01Q 1/00* (2006.01)
*H04B 7/005* (2006.01)   *H04B 17/14* (2015.01)
*H04B 17/21* (2015.01)   *H04B 17/26* (2015.01)
*H04B 7/06* (2006.01)    *H04B 17/00* (2015.01)

(52) Cooperative Patent Classification (CPC):
**H04B 17/12; H04B 7/0617; H04B 17/14;
H04B 17/21; H04B 17/26;** H04B 17/0085

(86) International application number:
**PCT/IL2017/050279**

(87) International publication number:
**WO 2017/153984 (14.09.2017 Gazette 2017/37)**

(54) **CALIBRATION TECHNIQUES FOR AN ANTENNA ARRAY**

KALIBRIERTECHNIKEN FÜR EINE GRUPPENANTENNE

TECHNIQUES D'ÉTALONNAGE POUR UN RÉSEAU D'ANTENNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.03.2016   US 201662304352 P**

(43) Date of publication of application:
**16.01.2019   Bulletin 2019/03**

(73) Proprietor: **Satixfy UK Limited
Farnborough, Hampshire GU14 7LS (GB)**

(72) Inventors:
• **RAINISH, Doron**
  **5231282 Ramat Gan (IL)**
• **FREEDMAN, Avraham**
  **6745904 Tel Aviv (IL)**
• **GOBERMAN, Dotan**
  **4493000 Ramat Hakovesh (IL)**

(74) Representative: **Boult Wade Tennant LLP
Salisbury Square House
8 Salisbury Square
London EC4Y 8AP (GB)**

(56) References cited:
EP-A2- 2 372 930        WO-A1-2014/197187
WO-A1-2015/022422       WO-A1-2015/066883
DE-A1- 3 909 874        US-A- 6 026 304
US-A1- 2002 155 818     US-A1- 2011 053 646
US-A1- 2013 077 708     US-A1- 2016 049 995
US-B1- 6 496 140        US-B1- 6 865 377
US-B1- 9 130 270        US-B2- 9 628 256

**Description**

**TECHNOLOGICAL FIELD**

The present invention is generally in the field of array antennas, and particularly relates to the calibration of such antennas.

**BACKGROUND**

A phased array antenna (PAA, also termed directive/electrically steerable antenna) is an array/matrix of antenna elements in which the relative phases or delays of the respective signals feeding the antennas are set in such a way that the effective radiation pattern of the array is reinforced in a desired direction and, at the same time, it is suppressed in undesired directions. The phase relationships among the antenna elements of the PAA may be fixed, or may be adjustable.

In basic PAA applications RF (analog) signals are delivered to/from the antenna elements through phase shift or time-delay devices configured to affect the desired radiation beam direction. In this way the angles of a directive beam can be instantly set in real time by electronically changing the phase shift of the RF signal of each antenna element. Better control over the radiation patterns can be achieved by simultaneously changing both amplitude and phase of the RF signals of each antenna element, also known as beamforming, used for achieving more general patterns of the formed beam, suppress side lobes, and to create radiation pattern nulls in certain directions.

In order to achieve accurate beamforming it is essential that all of the antenna elements of the PAA be amplitude and phase matched, or to a priori know the gain and phase differences of each antenna element of the array, which must be maintained in demanding environmental conditions over long time periods. Conventionally these goals been achieved using tight tolerance components, phase matched cables and/or factory measured calibration tables. However this is an expensive approach that offers little adaptation to the ambient environmental conditions.

The presence of amplitude and phase errors between antenna elements of the PAA cause distortions in the antenna radiation pattern in terms of beam pointing direction, sidelobe level, half power beam width and null depth. PAA calibration is typically achieved by tight tolerance design with factory determined calibration tables, radiative calibration utilizing internal and external radiating sources, and non-radiative dynamic calibration.

US Patent No. 6,346,910 describes an automatic array calibration apparatus which is capable of periodically calibrating beamforming offsets using internally generated calibration and test signals. The apparatus preferably includes a calibration signal generating unit which generates a continuous wave calibration signal which is input into a receiving channel as the input signal. I/Q signals are obtained from reception data channels which have been provided with the calibration signal. The apparatus also includes a loop back operation in which test signals are injected in transmission data channels, and are prepared for transmission at a transmission unit. The transmission signal is looped back to the receiving unit and I/Q signals are obtained from reception data channels supplied with the transmission signals.

**GENERAL DESCRIPTION**

There is a need in the art for PAA calibration techniques that can be conducted in real time and onsite without interrupting, or postponing, data communication scheduled for the PAA. The conventional calibration techniques used nowadays require the use of internal and/or external radiation sources and/or expensive equipment for achieving tight tolerance design goals. The present application provides PAA calibration techniques utilizing off-line signatures generated in sterile environment (laboratory conditions), and on-line signatures generated onsite during normal operation of the PAA. The signatures are a set of recorded signal measurements performed off line and on line and characterize the antenna.

In some embodiments specially designed digital beamforming hardware is used to enable the calibration process to be conducted in the digital domain, and to embed the calibration process into operational modes of the PAA during regular use thereof. This is achieved by storing the digitized off-line signatures in the memory of the system, and conducting the on-line calibration by interleaving in the transmission stream generated during regular operation of the PAA a set of known symbols to be transmitted from each antenna element at a time. The received signatures are processed and compared to the previously recorded off-line signatures, and the calibration data is adjusted whenever needed based on the comparison results.

In some possible embodiments an embedded calibration (compensation and/or correction) process is carried out in a digital beamforming (DBF) circuitry of an array that comprises a plurality of communication modules and a plurality of antennas. A communication module may comprise at least one beam forming unit (*e.g.,* on a chip) and at least one separated RF conversion unit (*e.g.*, on a chip). The process can comprise the following steps:

a) off-line calibration: in this step measurements are performed for each antenna element of the PAA, comprising near-field or far-field measurements of the PAA radiation pattern at different frequencies and scan angles, and signatures that characterize the PAA is accordingly determined;

b) on-line calibration: in this step a calibration waveform is transmitted from one single antenna element of the PAA at a time. The calibration waveform comprises a set of known symbols, that are transmitted in accordance with the operational bandwidth rate, and interleaved with, a transmission stream of the PAA;

c) comparison: in this step the on-line calibration waveform received in step (b) is compared with the off-line signatures determined in step (a); and

d) calibration: based on the results obtained from the comparison in step (c), at least one of the following parameters associated with the PAA is estimated: phase; gain; delay; frequency response and mutual coupling variations, and used to adjust the radiation patterns of the PAA.

Optionally, and in some embodiment preferably, the process comprises a step of correcting impairments in the digital domain (*e.g.*, which are impossible to correct in the analog domain), for example, mutual coupling, non-uniform frequency response, and the like. Thus alleviating the requirements that would otherwise be imposed on the analog domain, and consequently simplifying the antenna array structure.

One broad aspect of the present application relates to a method for carrying out embedded calibration, and/or compensation and/or correction in a digital beamforming (DBF) circuitry of an array that comprises a plurality of communication modules and a plurality of antennas. The method comprise carrying out an off-line calibration process including carrying out measurements for each element of the array as well as near-field or far-field measurements of the array radiation pattern at different frequencies and scan angles, determining a signature that characterizes the array, carrying out an on-line calibration including transmitted from one single element at a time a set of known symbols transmitted in accordance with the operational bandwidth rate and being interleaved with a transmission stream, comparing the received waveform with the determined off-line signature, and based on the comparison results estimating at least one of the following parameters associated with the array: phase, gain, delay, frequency response and mutual coupling variations.

The estimated parameters can be then used for correcting impairments in the digital domain. Optionally, and in some embodiments preferably, the corrected impairments comprise at least one of mutual coupling and non-uniform frequency response. The on-line calibration can be based on analysing the signals received at the receive elements in response to calibration signals transmitted by the transmit elements, or on a feedback conveyed from the output of power amplifier(s) (PA) to the receiving chain at the same element and using a regular transmit signal to carry out the on-line calibration procedure.

In some embodiment the on-line calibration comprises transmitting a signal from one element and receiving signals from all other elements of the antenna array, thereby contributing to relative calibration of the gain phase and time delay of the receiving chains. The on-line calibration can comprise calibrating gain phase and time delay of the transmitting chain, by randomly choosing a transmitting element and comparing the results to other transmitting elements.

The term signal path, or communication path, as used herein refers to the path in which signal passes in the system between one or more antenna elements of the PAA and a signal source or destiny device (modulator or demodulator). In this context the calibration data generated in embodiments disclosed herein is utilized to manipulate data streams passing through such paths in order to correct and/or compensate distortions induced by analog and/or digital components/devices through which the signal passes along the path. The term signature used herein to refer to a set of signals measurements by one or more antenna elements of a PAA responsive to the transmission of calibration sequence(s) from one or more other antenna elements of the PAA, or from one or more external radiation sources.

One inventive aspect of the subject disclosed herein pertains to a PAA communication system comprising an array of antenna elements, at least one digital beamforming circuitry associated with at least one of the antenna elements, and a control unit configured and operable to generate calibration data based on on-line signature received in one or more of the antenna elements during operation of the system, and to modify parameters of one or more elements in the at least one digital beamforming circuitry based on the calibration data to compensate flaws induced in the system due to artifacts in analog or digital portions of the system.

Optionally, and in some embodiments preferably, the system comprises at least one memory device for storing off-line signature received in one or more of the antenna elements of the system under idealized operational conditions. The control unit can be thus configured to compare the on-line signature with at least some portion of the off-line signature stored in the memory device and generate the calibration data based on the comparison results.

In some embodiments the off-line signature are generated responsive to transmission of one or more predetermined signals from at least one of the antenna elements under the idealized operational conditions (*e.g.*, factory/laboratory sterile condition), and wherein the control unit is configured and operable to cause transmission of the one or more predetermined signals from the at least one of the antenna elements during the system operation and record the on-line signature received in one or more of the other antenna elements of the array responsive thereto. Optionally, and in some embodiments preferably, the on-line signatures are received responsive to signals interleaved in a transmission stream of the antenna array during operation of the system without causing interruptions or delays therein.

The at least one digital beamforming circuitry, the control unit, and the at least one memory device, are implemented in some embodiments in a single integrated circuit configured to transmit a data stream in a form of one or more transmission beams generated via the antenna array. The integrated circuit can comprise at least one analog signal path configured to intermediate between the at least one digital beamforming circuitry and at least one of the antenna elements.

A radio frequency front end unit may be used to connect between one or more analog signal paths of the integrated circuit and the at least one of the antenna elements. In some embodiments the radio frequency front end unit comprises at least one signal transmit path, at least one signal receive path, and at least one oscillator. The at least one signal transmit path can use a summation unit to sum together analog signals outputted by the one or more analog signal paths of the integrated circuit, a frequency mixer for shifting the signal outputted by the summation unit to a frequency from the oscillator, and at least one amplifier for amplifying the signal outputted by the frequency mixer. The at least one signal receive path comprises in some embodiments at least one amplifier for amplifying signals received from at least one of the antenna elements, a frequency mixer for shifting the signal outputted by the at least one amplifier to a frequency of the oscillator, and a signal splitting network for delivering the signal outputted by the frequency mixer to one or more of the analog signal paths.

In some embodiments the at least one digital beamforming circuitry comprises a true time delay unit configured to affect a delay to the data stream in the digital domain. The delay affected by the true time delay unit is for causing a phase shift in respective analog signals generated by the system from the data stream. Optionally, and in some embodiments preferably, the delay affected by the true time delay unit is at least partially based on the calibration data. The at least one digital beamforming circuitry comprises in some embodiments at least one of the following units: a digital predistorter configured to adjust the data steam to compensate for nonlinearity in amplification stages of the system based at least partially on the calibration data; a pre-equalizer configured to adjust the data stream to correct non-flat frequency response of an analog channel associated with the digital beamforming circuitry based at least partially on the calibration data; and/or an I/Q compensator configured to adjust the data stream to correct I/Q distortions based at least partially on the calibration data.

The control unit is configured in some embodiments to modify the parameters of one or more of the elements of the at least one digital beamforming circuitry based on the calibration data to compensate at least one of mutual coupling between the antenna element and non-uniform frequency response of the antenna elements.

Another inventive aspect of subject matter disclosed herein pertains to a method of calibrating communication conducted by an antenna array. The method comprises obtaining radiation patterns by at least one antenna element of the antenna array under idealized operational conditions responsive to a calibration sequence transmitted by at least one other antenna element of the antenna array under the idealized operational conditions, obtaining radiation patterns by the at least one antenna element in an operational state of the array responsive to transmission of the calibration sequence by the at least one other antenna element, comparing the radiation patterns obtained under the idealized conditions and in the operational state, and generating calibration data to calibrate the communication based thereon. Optionally, and in some embodiments preferably the transmission of the calibration sequence is interleaved in a transmission stream transmitted in the operational state via the antenna array during regular operation thereof.

A digital beamforming process can be used to manipulate stream of data to be communicated via the antenna array. The method can accordingly comprise using the generated calibration data to adjust the data stream by the digital beamforming process in order to correct errors induced in signals communicated via the antenna array. Optionally, and in some embodiments preferably, the digital beamforming process comprises a true time delay process configured to affect a delay to the data stream in the digital domain at least partially based on the calibration data for causing a delay in respective analog signals communicated via the antenna array. The digital beamforming process can comprise at least one of the following processes: a complex gain process configured to affect a gain and phase shift to the data stream in the digital domain as for causing a gain and phase shift in respective analog signals communicated via the antenna array; a digital predistorter process configured to adjust the data steam based at least partially on the calibration data in order to compensate for nonlinearity in amplification stages used by the antenna array; a pre-equalizing process configured to adjust the data stream based at least partially on the calibration data to correct non-flat frequency response of at least one analog channel associated with the antenna array; and/or an I/Q compensation process configured to adjust the data stream based at least partially on the calibration data in order to correct I/Q distortions of signals communicated via the antenna array.

The method can comprise storing the radiation patterns obtained under the idealized operational conditions in a memory device, periodically or intermittently transmitting the calibration sequence in operational states of the array, and generating the corresponding calibration data to calibrate the communication in a self-calibration manner.

In some possible applications a non-transitory machine readable medium is used for storing instructions executable by a processor for carrying out the method described hereinabove and at least one of the steps/features associated with it.

Yet another inventive aspect of the subject matter disclosed herein pertains to a communication system configured to communicate data streams by one or more beams via an antenna array. The system is configured for self-calibrating communication paths thereof and comprises: a control unit configured and operable to interleave in the communicated streams a calibration sequence for transmission by one antenna element of the antenna array and obtain a radiation pattern responsively received in at least one other antenna element of the array, compare the obtained radiation pattern to one or more off-line radiation patterns similarly obtained by the system during a calibration process, and generate calibration data based on the comparison; and a digital beamforming unit configured to use the calibration data in manipulations applied to the data streams in the digital domain for forming the one or more beams and correcting distortions caused by the communication paths of the system.

The control unit is configured in some embodiments to interleave the calibration sequence in the communicated streams without causing interruptions or delays therein. Optionally, and in some embodiments preferably, the digital beamforming unit comprises at least one of the following units: a complex gain multiplier configured to affect the relative phase shift and gain of the data stream, in the digital domain at least partially based on the calibration data; a true time delay unit configured to affect a delay to the data stream in the digital domain at least partially based on the calibration data; a digital predistorter configured to adjust the data steam to compensate for nonlinearity in amplification stages of the system based at least partially on the calibration data; a pre-equalizer configured to adjust the data stream to correct non-flat frequency response of an analog channel associated with the digital beamforming circuitry based at least partially on the calibration data; and/or an I/Q compensator configured to adjust the data stream to correct I/Q distortions based at least partially on the calibration data.

## BRIEF DESCRIPTION OF THE DRAWINGS

In order to understand the invention and to see how it may be carried out in practice, embodiments will now be described, by way of non-limiting example only, with reference to the accompanying drawings. Features shown in the drawings are meant to be illustrative of only some embodiments of the invention, unless otherwise implicitly indicated. In the drawings like reference numerals are used to indicate corresponding parts, and in which:

Fig. 1 is a top perspective view of an array antenna and beamforming circuitry used therewith according to some possible embodiments for communication of data streams by one or more beams;

Fig. 2 is a block diagram schematically illustrating the digital beamforming unit according to some possible embodiments;

Fig. 3 is a block diagram schematically illustrating digital and analog domain elements of the digital beamforming unit according to some possible embodiments;

Fig. 4 is a block diagram schematically illustrating digital true time delay circuitry and digital signal correction components of the digital transmit beamforming components according to some possible embodiments;

Fig. 5 is a block diagram schematically illustrating digital true time delay circuitry and digital signal correction components of the digital receive beamforming components according to some possible embodiments;

Fig. 6 is a block diagram schematically illustrating a radio frequency front end usable according to some possible embodiments for coupling between the beamforming circuitry and the antenna element;

Fig. 7 is a block diagram schematically illustrating a communication system utilizing a plurality of a beamforming circuitries to communicate data streams in one or more beams through a plurality of antenna arrays according to some possible embodiments;

Figs. 8A and 8B schematically illustrate on-line onsite calibration techniques of a PAA system according to some possible embodiments, wherein Fig. 8A is a flowchart illustrating a calibration process and Fig. 8B is a block diagram generally showing components of the PAA system;

Fig. 9 demonstrates possible applications utilizing the PAA system according to some possible embodiments;

Fig. 10 schematically illustrates communication platforms utilizing the PAA system according to some possible embodiments; and

Figs. 11 and 12 schematically illustrate a full satellite and a communication module in an operating state, according to some possible embodiments, respectively.

## DETAILED DESCRIPTION OF EMBODIMENTS

One or more specific embodiments of the present disclosure will be described below with reference to the drawings, which are to be considered in all aspects as illustrative only and not restrictive in any manner. In an effort to provide a concise description of these embodiments, not all features of an actual implementation are described in the specification. Elements illustrated in the drawings are not necessarily to scale, emphasis instead being placed upon clearly illustrating the principles of the invention. This invention may be provided in other specific forms and embodiments without departing from the essential characteristics described herein.

The present application relates to digital calibration techniques for phased array antennas (PAAs) configured for adjusting receive and/or transmit path parameters of the antenna elements during it normal operation, without interrupting or postponing scheduled data communications thereof. Possible applications of the calibration techniques disclosed herein employ a highly integrated circuit (IC)/chip configured to manipulate and shape the signal patterns communicated via the PAA, and characterized by an extremely small size, low power consumption and low cost.

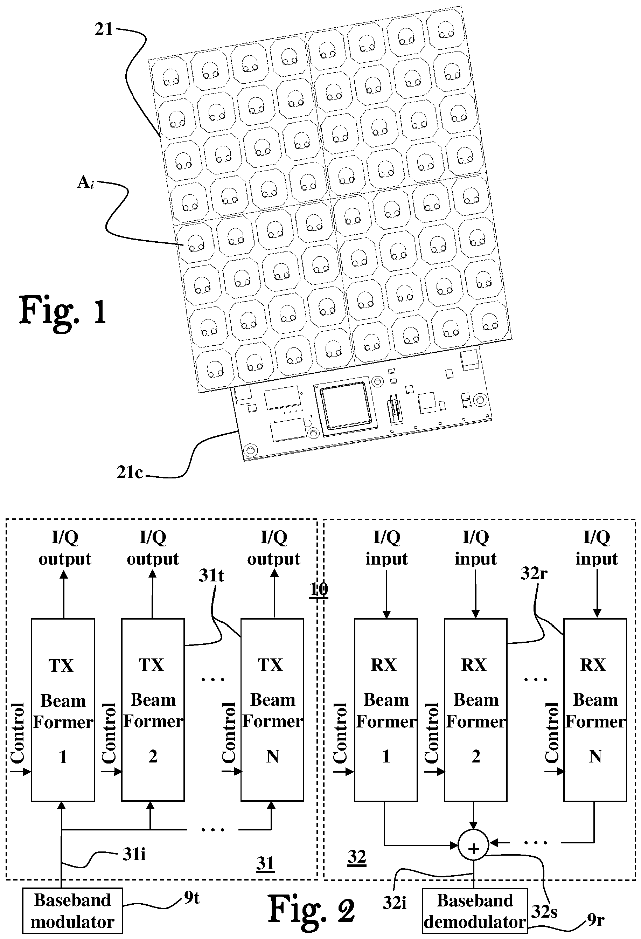

A PAA digital beamforming chip (10 in Fig. 2) constructed in accordance with embodiments disclosed herein allows its integration within a PAA 21, as demonstrated in Fig. 1. In this specific and non-limiting example, the PAA 21 comprises a square array of antenna elements $A_i$ (where $1 \leq i \leq M$ is a positive integer) arranged side-by-side to form matrix shape rows and columns. In this specific and non-limiting example the PAA 21 comprises four antenna matrices, where each array matrix is a $4 \times 4$ matrix of 16 antenna elements $A_i$. The PAA is electrically connected to a circuit board 21c comprising the PAA digital beamforming chip (10), 16 radio frequency chips (not shown), and circuitries for operating the PAA.

Such design is scalable to meet the required antenna size and number of beams it can simultaneously handle. For example, a PAA having a 256 ($16 \times 16$) antenna elements array can be similarly constructed from four of the $8 \times 8$ PAA 21 units, each having its respective digital beamforming chip (10), radio frequency chips and circuitries for operating the PAA.

It is noted that in possible embodiments the antenna elements $A_i$ can be arranged in other array forms, which are not necessarily of square/rectangular shape or planar. For example, and without being limiting, the antenna elements $A_i$ of the PAA 21 can be arranged to from a round matrix. Additionally or alternatively, the antenna elements $A_i$ of the PAA 21 can be deployed over a non-flat surface and comprised of antenna elements randomly located in space.

Fig. 2 schematically illustrates general structure of the digital beamforming chip 10 according to some possible embodiments. The chip 10 comprises a transmitter 31 having a number N (e.g., 16) of transmit (TX) chains, each comprising a transmitter beamforming module 31t configured to manipulate the digital data steam 31i received from the baseband modem/modulator 9t. The digital data input 31i to each of the TX chains can be generated by a serial digital interface (e.g., JEDEC JESD204B) configured to feed a common digital data steam to the beamforming modules 31t in each of the transmit chains. The output generated by each beamforming module 31t is a baseband (I/Q) analogue signal.

The chip further comprises a receiver 32 having a number N (e.g., 16) of receive (RX) chains, each comprising a receiver beamforming module 32r configured to manipulate a baseband (I/Q) analogue signal egressing from the antenna elements of the PAA 21. The digital outputs of the receiver beamforming modules 32r of all of the receive (RX) chains are summed together by the summation unit 32s and outputted via a serial digital interface 32i (e.g., JEDEC JESD204B) to a baseband demodulator 9r.

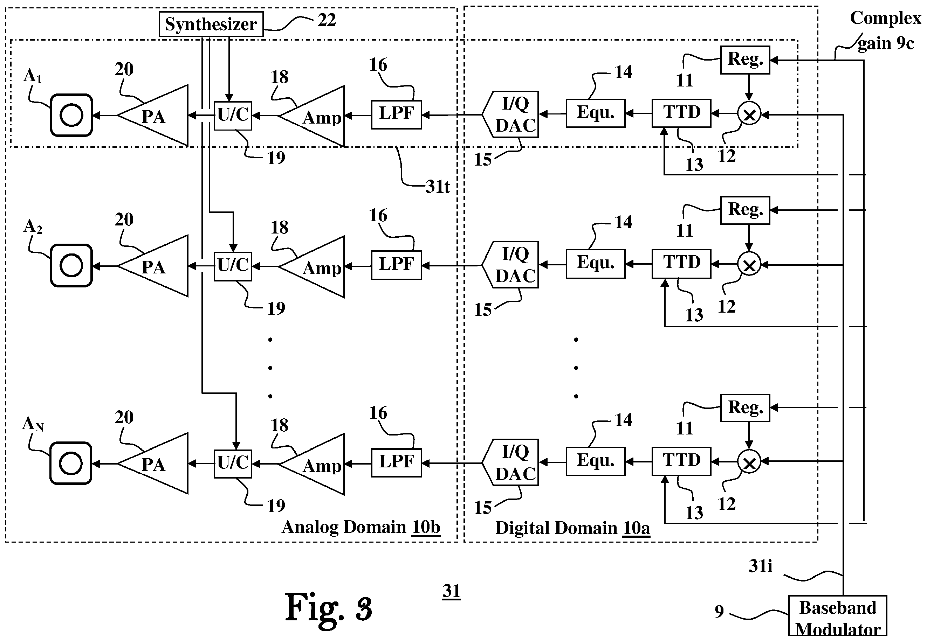

Fig. 3 shows a possible structure of the transmit (TX) chains of the transmitter array 31 of the beamforming chip 10, demonstrating the principle of operation and high level architecture of the antenna system for which the beamforming is designed for, according to some possible embodiments. The transmit array 31 comprises N transmitter beamforming modules 31t, each comprising a digital domain portion 10a (also referred to as digital baseband beamforming channel), and an analog domain portion 10b.

In the digital domain 10a, each transmitter beamforming module 31t receives the data stream 31i generated by the baseband modulator 9 encoding waveform signals to be transmitted by the PAA 21. The data stream 31i is multiplied in the multiplier 12 by a complex gain 9c, stored in the register 11, which contains predefined gain and phase values.

Thereafter, digital true-time-delay (TTD) 13 is applied according to the transmission direction required from the PAA 21. After the TTD 13 the data stream is passed through the digital equalizer 14 configured to compensate the channel fading over the analog transmission path towards the respective antenna element $A_i$. The data stream can optionally undergo an I/Q (in-phase/quadrature) imbalance correction step (not shown). The equalized and corrected signal is then converted into an analog signal by the I/Q digital-to-analog converter (I/Q DAC) 15.

As will be described hereinbelow, in some embodiments on-line calibration of the PAA system is carried out in the digital domain 10a of the chip in the TTD 13 and/or in the equalizer 13, in the complex gain factor 12 and in the I/Q correction stage (not shown). As will be also apparent from the following disclosure, the beamforming chip 10, and/or the PAA 21, may comprise in possible embodiments a self-calibration circuitry (not shown).

In the analog domain 10b the analog signal from the I/Q-DAC 15 is passed through the low pass filter (LPF) 16, and thereafter optionally pre-amplified by the Amp 18, and converted by the up-converter (U/C) 19 using the local oscillator frequency received from the synthesizer 22. The up-converted signal is then amplified by the power amplifier (PA) 20 and transmitted via the respective antenna element $A_i$. In some embodiments the frequency conversion is carried out in stages, for example, by converting the analog baseband signal into an intermediate frequency (IF), and thereafter converting the analog IF signal into the actual radio-frequency (RF) of the communication transmission.

It is noted that the structure of the receiver (32 in Fig. 2) is very similar to the transmitter array 31, albeit reverse signals' directions.

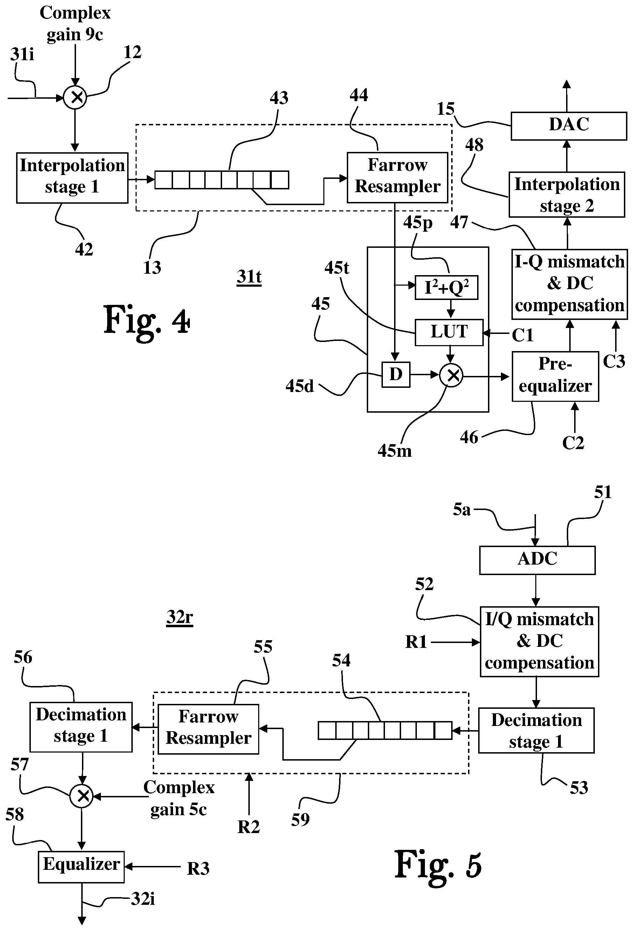

**Fig. 4** schematically illustrates the inner structure of a TX beamforming module **31t** in the digital domain portion (**10a**), according to possible embodiments. The input data stream **31i** to the beamforming is a stream of I (in-phase) and Q (quadrature) digitized samples of the modulated baseband signal. The received data stream **31i** first undergo gain and phase correction suitable for a selected central frequency, by the basic multiplier **12** and the complex gain **9c**. After the signal correction step, the interpolator **42** is used to increase the sampling rate of the data stream, which is then passed through the TTD circuit **13** comprising the shift register **43** and the re-sampler unit **44.**

The shift register **43** is used to apply delays that are integer multiplications of the sampling time, and the re-sampler **44** is used to apply delays that are smaller than sampling rate. In this specific and non-limiting example a Farrow re-sampler is used to apply the delays that are smaller than the sampling time, but other suitable re-sampling technique may be used instead. A digital pre-distortion unit **45** is used here to compensate for nonlinearity of the amplifier(s) in the analog domain (**10b**), by amplifying, attenuating or adjusting the phase of each of the I/Q samples by a complex factor derived from the original amplitude of the samples via a lookup table (LUT). Particularly, each I/Q sample received in the predistorter **45** is stored in a delay unit **45d** configured to input the I/Q sample to the multiplier **45m** after a corresponding correction factor is derived by the LUT **45t** based on an amplitude of the I/Q sample, as derived by the amplitude determining unit **45p**. The I/Q sample stored in the delay unit **45d** is then modified by the multiplier **45m** based on the corresponding correction factor outputted by the LUT **45t.**

The amplitude determining unit **45p** can be configured to determine the amplitude of a sample based on quadratic values of the in-phase ($I^2$) and quadrature ($Q^2$) components of each sample. Optionally, and in some embodiments preferably, an on-line amplification calibration data **C1** is used to adjust the values recorded in the LUT **45t** to compensate for amplification distortions detected during regular use of the system, and which were not considered/present during the initial (off-line) calibration of the system.

More particularly, the values of the LUT **45t** are typically determined for each beamforming chip system based on off-line calibration values obtained during the system manufacture under sterile laboratory conditions. Thus, the values recorded in the LUT **45t** may become inaccurate to some degree over time as the system is being used in the field under varying environmental conditions. As such variations affect the nonlinearity of the amplification stages, the online calibration technique disclosed herein is used to detect deviations from the original amplification curves of the system and generate corresponding amplification calibration data **C1**, as may be needed, to correct the deviations from the original amplification curves.

A pre-equalizer unit **46** is then used to correct/adjust non-flat frequency response of the channel in the analog domain (**10b**). The pre-equalizer unit **46** is configured to compensate for the non-flat channel frequency response as detected during the original off-line calibration of the system during the system manufacture, and thus may not be able to compensate the channel frequency response deviations that typically occur over time during continuous use of the system under varying environmental conditions. Thus, in some embodiments, a channel calibration factor **C2** is used in some embodiments to adjust the pre-equalizer unit **46** according to online calibration data generated by the system during its use.

After the pre-equalization, an I/Q mismatch and DC compensation stage **47** is applied to resolve I/Q imbalances. In some embodiments I/Q calibration factor **C3** is received and used in the I/Q mismatch and DC compensation stage **47** to compensate for any I/Q distortions that may be detected in the online calibration process.

Next, the sampling rate of the samples is matched to the rate of the DAC **15** by means of another interpolation stage **48**. Thereafter, the digital to analogue converter **15** converts the signal samples to the analogue domain.

Alternatively, samples of a single signal at intermediate frequency (IF), converted previously digitally by the modulator (**9**) can also be applied. In this case the I/Q mismatch unit **47** is not required and can be omitted, and the complex gain (**9c**) would be implemented as a variable gain plus a phase shifting element. The following formulas exemplifies an implementation of the complex gain in form of a variable gain and phase shifting elements for some signal A(t):

$$s(t) = A(t)\cos(2\pi ft + \phi(t)) = \text{Re}\{A(t)\exp[j2\pi ft + \phi(t)]\}$$

in complex representation (dropping A and $\phi$ dependence on t), this becomes:

$$A\exp(j2\pi ft + \phi) = A\exp\phi\exp(j2\pi ft)$$

$$= C\exp(j2\pi ft) = (C_I + jC_q)[\cos(2\pi ft) + j\sin(2\pi ft)] =$$

$$[C_I \cos 2\pi ft - C_q \sin(2\pi ft)] + j[C_q \cos(2\pi ft) + C_I \sin(2\pi ft)]$$

Typically for the same signal, I/Q implementation requires two paths with a given sample rate, while the intermediate frequency (IF) implementation would require a single path albeit with at least double the sample rate.

**Fig. 5** schematically illustrates the inner structure of a RX beamforming module **32r** in the digital domain portion (**10a**), according to possible embodiments. The analog signals **5a** egressing from an RF chain connected to an antenna element **A$_i$** is sampled, (after amplification and down-conversion in the RF front end) by the analog-to-digital converter **(ADC) 51,** and the sample signals then undergo an I/Q mismatch correction and DC compensation in unit **52** to resolve I/Q imbalances. A decimator **53** can then be used in order to reduce the sampling rate of the incoming signal. The signals samples are then passed through the true time delay circuitry **59** comprised of the shift register **54** and the Farrow resampler **55.** A decimation stage **56** may be then used to further reduce the sampling rate. The signal samples are then subject to gain and phase correction suitable for a selected central frequency, by the multiplier **57** and the complex gain **5c** (a complex gain and an equalizer, similar to the one presented in the TX beamforming). An alternative IF implementation is also possible.

Optionally, and in some embodiments preferably, the I-Q mismatch correction and DC compensation unit **52** is configured to receive and use an on-line calibration factor **R1** for correcting I/Q distortions identified in the on-line calibration process. The true time delay circuitry **59** is configured in some embodiments to receive and use an on-line calibration factor **R2** for adjusting the delay applied over the signal samples to compensate any phase shift that may be introduced by the receiver amplifying stage (not shown) and detected by the online calibration process. Additionally or alternatively, the equalizer **58** is adapted to receive and use a calibration factor **R3** for compensating for deviation of the receiver channel frequency response detected by online calibration process.

Optionally, and in some embodiments preferably, the receive path calibration factors C1, C2 and C3, and transmit path calibration factors R1, R2 and R3, comprise factory (off-line) calibration factors and online calibration factors determined during the continous operational use of the system.

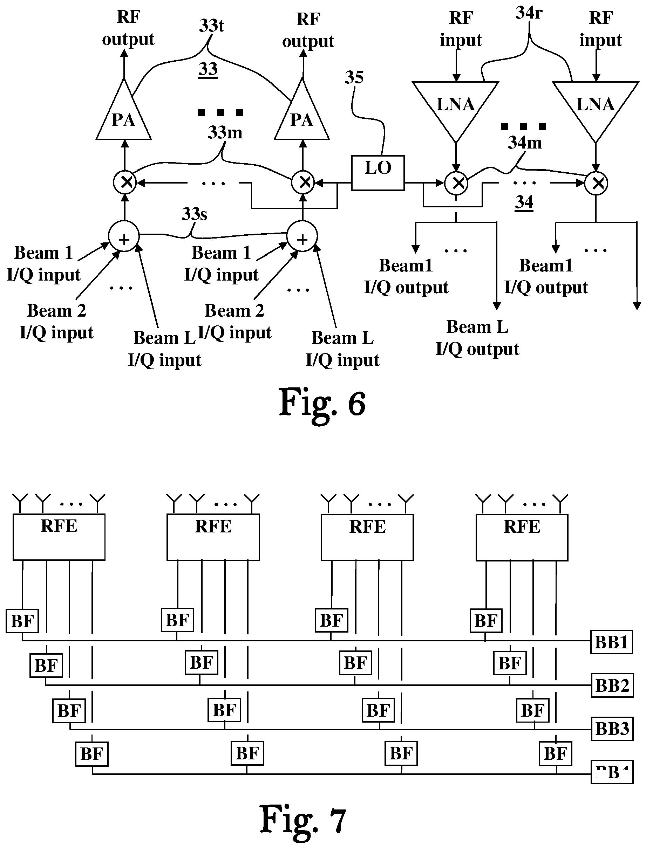

In some embodiments the beamforming chip **10** is connected to a radio frequency (RF) Front end (RFE) comprising a transmit RFE **33** and a receive RFE **34,** as illustrated in **Fig. 6.** The transmit RFE **33** comprises a plurality of transmit channels, each comprising a summation unit **33s** for summing I/Q signals outputted by the transmitter **31** of the beamforming chip **31,** a frequency mixer **33m** configured to shift the frequency of the summed signals to a carrier frequency generated by the local oscillator (LO) **35,** and a power amplifier **(PA) 33t** for transmitting the signals produced by the frequency mixer **33m** via a respective antenna element(s). The receive RFE **34** comprises a plurality of receive channels, each comprising a low noise amplifier **(LNA) 34r** for amplifying signals received via a respective antenna element(s) and a frequency mixer for shifting the frequency of the received signals to a frequency *(e.g.,* IF) generated by the LO **35,** where the frequency shifted signal generated by the mixer **34m** is split into a plurality of analog I/Q signals fed to the receiver **32** of the beamforming chip **10.**

The chip set may also be connected and chained, to enable its use in multibeam operation and/or in larger arrays. As will be appreciated by those skilled in the art, the separation referred to is not necessarily a physical separation, but rather a conceptual one. In other words, the elements of the RFE may be implemented as part of the beamforming chip **10** on a single die. Alternatively, the components of the beamforming chip **10** may be implemented on a different die.

The RFE comprises a plurality of TX paths and a plurality of RX paths *(e.g.,* 16), as depicted in the example of Fig 6. A TX path may comprise in some embodiments two reconstruction Low Pass Filters (LPFs), a direct up converter from I-Q (or IF) to the required frequency band, a Variable Gain Amplifier (VGA), and a Power Amplifier (PA). Possibly, certain RF filtering might also be required. A RX path may comprise in some embodiments a Low Noise Amplifier (LNA), a VGA, direct down converters from the desired frequency to I-Q (or IF), two anti-aliasing filters that are preferably used before a signal sampler, to restrict the bandwidth of a signal. Here again, a certain RF filtering might also be required. The local oscillator (LO) system demonstrated in this figure comprises two Phase Locked Loops (PLLs), namely an RX and a TX which are locked to an external synthesizer. A RX/TX switch (not shown in this figure) is used for each of the RX/TX pairs *(e.g.,* 16) depending on whether that RX/TX pair is currently in a transmitting mode or in a receiving mode.

Array Scalability

In some embodiments there is provided a scalable system that comprises baseband digital beamforming chips (BF chips) and separated RF conversion chips (RFE chips), essentially connected via a simple baseband analogue interface. As a result, using two basic building blocks, the configuration enables, both on the transmit side as well as on the receive side, to construct large arrays having a large number of antennas and the formation of separate beams operating simultaneously (multi-beam configuration).

Thus, the size of the array may be enlarged by using a required number of the RFE building blocks. If a larger number of beams is to be supported, BF chips can be added to provide the necessary signal processing for each of the beams. The connection between the building blocks is simple and can be easily extended as necessary, for example, and without being limiting, the connection between the blocks can be either achieved by simple analog connection between the block, or it may be achieved via the serial digital data bus. On top of that, there are no constraints in the design of any of the building blocks themselves as a function of the actual array size or the number of beams.

Additionally, the digital compensation circuitry included in the embodiment make it possible to correct for various impairments and errors inherently present in a construction of such arrays, as is known to those skilled in the art. This capability makes it possible to alleviate the requirements and hence the cost of the array itself. A typical example is the case of cable and connection path lengths to the antenna elements within an array, which in traditional design need to be equal to each other with a very small tolerance, whereas such difference can be compensated digitally using the true-time delay circuitry described hereinabove.

**Fig. 7** exemplifies possible connections that are used to form a four beam, 64 antenna element array, using the beamforming chips **BF (10),** each supporting a single beam and 16 antenna elements, and RF chips, each supporting 16 antenna elements as well. 16 beamforming **BF** chips are deployed in this configuration that requires four RF front end **RFE** chips. On the transmit side, the modulated digital signal is formed by the baseband modulators **BB1, BB2, BB3** and **BB4**. In some embodiments each output is chained (via SerDes, *e.g.,* JEDEC JESD204B) to four beamforming chips. The outputs of the beamforming **BF** chips that belong to a given group of 16 elements, are summed by a RF front end chip to drive the antenna elements. It should be noted that the summation in this example is an analog summation performed in the baseband. However, digital summation within the BF chips, which are daisy chained to each other is also possible.

On the receive side, the antenna outputs of each group of antenna elements are distributed among all the **BF** chips that support the elements that belong to that group, where each of these elements is configured to provide the relevant digital output resulting from the proper summation of the elements outputs. The outputs of the **BF** chips belonging to the same beam are chained to each other and summed to form the beam baseband chip input. The distribution can be made in either the analog domain or in the digital domain

The beamforming chip **10** used in embodiments of the present application is typically calibrated in the sterile/laboratory conditions to compensate for nonlinearity of the amplification stages, and the imperfections of the analog receive and transmit paths. However, during normal use in field conditions the operation of various elements of the system is effected due to the changing environmental conditions, continuous wear of system elements, and physical displacements of the antenna and channel elements in the system. There are various sources of system changes/imperfections that can occur along continuous use of the system, that induce errors into the receive and transmit paths of the system. To name but few, such sources might be element manufacturing tolerance and misalignment, mutual coupling among elements that might result in different radiation patterns for central and edge elements, gain and phase variations of the power amplifiers among elements and over frequency and input signal level, phase variations of LO between elements, I/Q DC-offset, phase and gain mismatch between channels, connections mismatches as well as different path lengths and non-linear characteristics of the power amplifiers. On the digital side, quantization might also be a source for errors. In addition, at least some of the above parameters might vary as a function of temperature, manufacturing variances and operation conditions.

The solution in some possible embodiments distinguishes between off-line calibration procedures and on-line calibration procedures. The off-line calibration procedures include calibrations that are performed during manufacturing and validation phase, whereas the on-line calibration refers to array monitoring procedures which are applied during the array deployment phase by determining one or more array radiation patterns (also referred to herein as signatures) during operational use of the system, and comparing to array radiation patterns recorded in the off-line calibration stage under similar conditions. The array radiation patterns can be determined by the element radiation pattern, as well as by the input signal gain, delay and phase, for each element at each frequency.

The off-line calibration procedures include specific measurements that are carried out for each antenna element and near-field or far-field measurements of the array pattern at different frequencies and scan angles. A calibrated array should then undergo a "signature" recording that will be used in the on-line stage.

Optionally, and in some embodiments preferably, during the off-line calibration process each element is checked at least for the following:

- Element radiation pattern, to be performed within an antenna range. The pattern is to be measured for each element that belongs to the array, while all other elements are either turned off or transmit a zero signal. Measurements should be made across a pre-defined frequency range.
- Gain and phase response of the RF Front end (RFE) chips, preferably at both, the linear and non-linear range of operation, over the pre-defined *(e.g.,* the entire operational) frequency range.
- Local oscillator distribution tree accuracy. This includes measurements of delay, phase and gain of the LO input to each RFE.
- Each DAC output should be calibrated for minimal I/Q mismatch and offset.

The results of these off-line measurements may be provided in a form of a calibration table for each scanning angle, which would include gain, phase and group delay correction for each one of the elements.

The array should then be tested within an antenna range using the per-element calibration table derived in the previous stage. Tests should be made for all required scan angles, operational frequency range and operation temperatures. The calibration tables and internal components are preferably adjusted at this stage.

After conducting the off-line calibration procedures the system practically becomes operational, and after it is installed for normal use it can be calibrated from time to time, or periodically, by carrying the on-line calibration procedure and comparing the obtained array radiation patterns to the off-line array radiation patterns recorded in the system. The main objects of the on-line calibration procedures are to confirm that all of the antenna elements are correctly operating and to modify the calibration table when required, according to the varying operational conditions.

In some embodiments the on-line calibration is based on analysing the signals received at the receive elements in response to calibration signals transmitted by the transmit elements. In case of transmit-only or receive-only array, a single receive (or transmit) element located in front of or at the antenna array plane may be used. In any case, the location of the calibration receiver should be fixed and calibrated during the off-line calibration stage. Other option of calibration may include using a feedback conveyed from the output of the PA (by directional coupler or some other means) to the receiving chain at the same element, and using the regular transmit signal to carry out a calibration routine, which enables calibrating the PA as it transmit high power.

Transmitting from one antenna element of the PAA and receiving from all the other elements of the PAA contributes to relative calibration of the gain phase, time delay, and frequency response of the receiving chains. By randomly choosing the transmitting antenna element and comparing the results to those of other transmitting elements, the transmitting chain gain phase and time delay may be calibrated. The location of the transmitting element needs to be considered.

Optionally, and in some embodiments preferably, the on-line calibration comprises interleaving a calibration waveform during operation of the system with the transmission stream conducted by the PAA system. The calibration waveform is transmitted from one single antenna element at a time, comprising a set of known symbols that are transmitted in accordance with the operational bandwidth rate of the system. The waveform received by all other antenna elements of the PAA is then compared to a "signature" waveform, recorded during the off-line calibration stage. Based on the comparison results phase, gain, delay, frequency response and mutual coupling variations can are estimated, corresponding compensating on-line calibration data is generated and entered into the calibration table of the system.

As the calibration receiver in such on-line calibration procedures is located close to the transmitting antenna elements, the signal to noise ratio (SNR) in the reception is expected to be sufficiently high to guarantee that the measured parameters are accurately determined and effectively limited by the quantization noise. In some embodiments a complete on-line calibration cycle of a PAA comprising 256 antenna elements is completed within 128ms, assuming a super-frame of 0.5ms (for 1Gsps transmission). It is assumed that variations of the parameters are affected by temperature variations, however, the latter are assumed to be at a much lower rate.

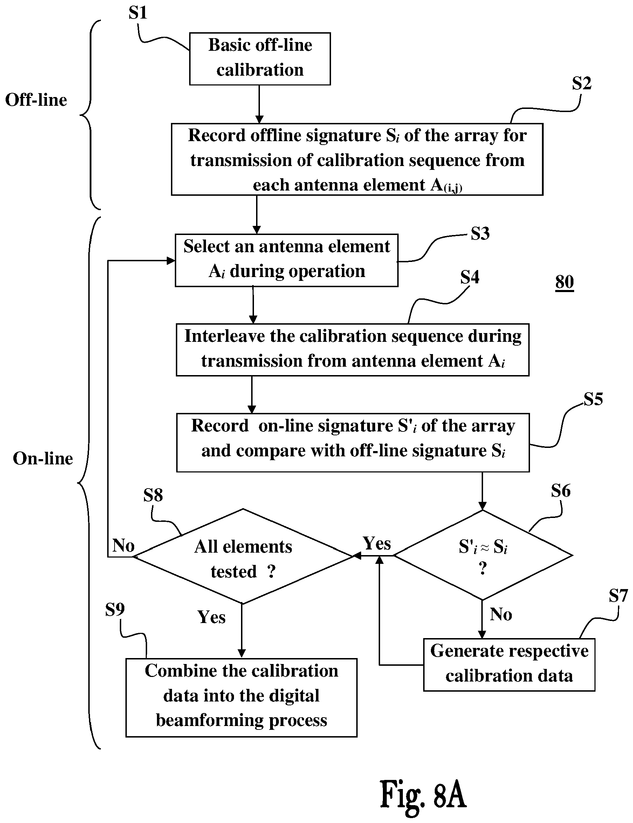

**Fig. 8A** shows a flowchart **80** schematically illustrating system calibration according to some possible embodiments. In step **S1** basic off-line calibration is carried out in factory/laboratory conditions to compensate for gain and phase distortions induced by the various elements of the system. Following the basic calibration procedures of step **S1**, in step **S2** radiation signatures are generated for each and every antenna element of the PAA, and recorded in system memory. Optionally, and in some embodiments preferably, a radiation signature is generated for each antenna element $A_i$ of the PAA by transmitting therefrom a predefined sequence of symbols while in the factory/laboratory conditions, and recording the radiation waveforms received in each of the other antenna elements $A_j$ (where $1 \leq j \leq M$ and $j \neq i$ is a positive integer) of the PAA responsive to the transmission of the predefined sequence of symbols. The off-line signatures can be generated for various different transmission frequencies e.g., defined within a nominal frequency range of the system.

The following steps **S3-S9** are typically performed during normal operation of the system under field conditions. In step **S3** an antenna element $A_i$ of the PAA is selected, and in step **S4** the predetermined symbol sequence is transmitted from the selected antenna element $A_i$, at the same frequency (or at least one of the frequencies) used for generating the off-line signatures in step **S2**. The radiation waveforms received in all other antenna elements $A_j$ (where $1 \leq j \leq M$ and $j \neq i$ is a positive integer) responsive to the transmission of the predetermined symbol sequence are then determined as a respective on-line signature $S'_i$ of the antenna element $A_i$. Optionally, and is some embodiments preferably the transmission of the predetermined symbol sequence from the selected antenna element $A_i$ is interleaved in the transmission stream generated by the system during regular operation of the PAA system.

In steps **S4-S5** the determined on-line signature $S'_i$ is compared (*e.g.,* by cross-correlation) with the respective off-line signature $S_i$. If it is determined in step **S6** the on-line and off-line signatures are substantially different, in step **S7** the identified differences are analysed and respective on-line calibration data is generated for rectifying any deficiencies evolving in the elements in the transmit path of the selected antenna element $A_i$, and/or in the receive path of one or more (or all) of the other antenna elements $A_j$. Step **S8** determines if further on-line calibration signatures are needed for any of the other antenna elements of the PAA.

If it is determined in step **S8** that additional on-line signatures are needed, the control is passed back to step **S3** for selecting a new different antenna element for the transmission of the predetermined symbol sequence and testing its off-line and online signatures. Otherwise, if it is determined in step **S8** that there is no need for additional on-line signatures, in step **S9** the calibration data generated is used in the digital beamforming stages of the chip **10** to apply impairments and corrections to any deficiencies evolving in the receive and/or transmit paths of the system.

In some embodiments the on-line calibration data comprises one or more of the following parameters: gain, phase, delay, equalizer taps value, DC offset and I/Q mismatch and digital pre-distortion of the amplifiers. The on-line calibration data can be stored in a memory of the system and applied to the array system for different operation conditions. Various calibration means can be used in the digital domain of the chip design to affect correction of a large variety of impairments, such as, but not limited to, a digital pre-distortion unit, a pre-equalizer unit, an I/Q mismatch correction and a DC compensation unit. Optionally, calibration values can be programmed to enable carrying out corrections for such errors that will occur in the chain, in addition to the basic gain, phase and delay values used by the system.

It should be understood that throughout this disclosure, where a process or method is shown or described, the steps of the method may be performed in any order or simultaneously, unless it is clear from the context that one step depends on another being performed first.

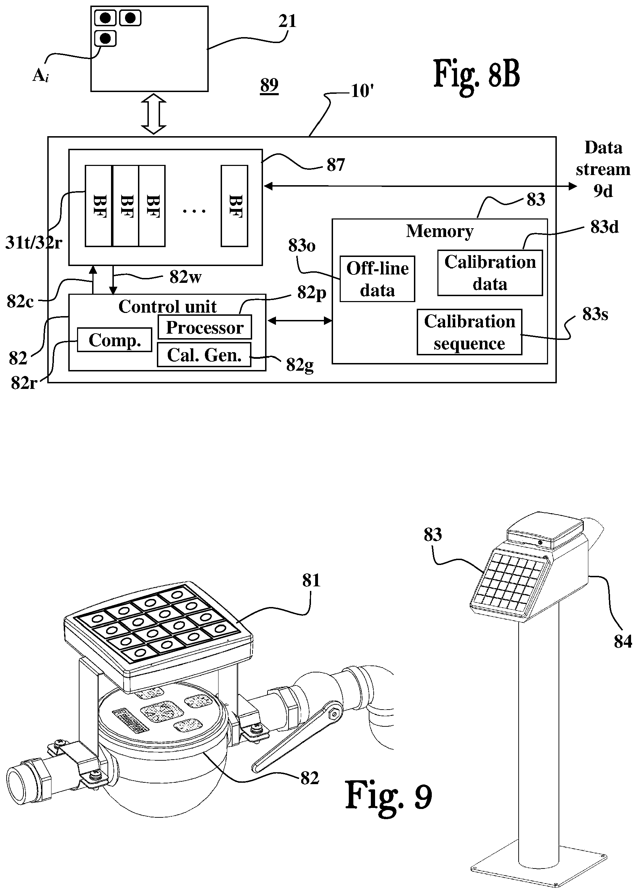

**Fig. 8B** is a block diagram of a PAA system **89** according to some possible embodiments. The PAA system **89** comprises an array **21** of antenna elements $A_i$ electrically coupled to the beamforming chip **10'** configured to transmit or receive the data stream **9d** in a form of one or more beams via the antenna array **21**. The beamforming chip **10'** comprises a digital beamforming unit **87** comprising a plurality of the digital beamforming units **31t/32r** (shown in **Fig. 2),** a control unit **82,** and a memory unit **83.**

The control unit **82** is configured and operable to provide calibration data **82c** to the digital beamforming unit **87,** receive radiation waveforms data **82w** from the digital beamforming unit **87,** and optionally operate the digital beamforming unit **87**. The memory unit **83** comprises off-line radiation waveforms data **83o**, calibration data **83d,** and in some embodiments also the sequence of calibration symbols **83s** used to generate on-line radiation waveforms **82w** and the off-line radiation waveforms **83o**.

The control unit **82** is configured and operable to operate the beamforming unit **87** to transmit the calibration sequence **83d** via one or more of the antenna elements $A_i$, and receive from the beamforming unit **87** corresponding radiation patterns **82w** generate in response to the transmission of the calibration sequence **83d,** compare the received radiation patterns **82w** to one or more of the off-line radiation patterns **83o**, and generate corresponding calibration data **82c** based on the comparison results and provide the same to the digital beamforming unit **87** for on-line calibrating various elements thereof. Optionally, and in some embodiments preferably, the control unit **82** is configured to interleave the transmission of the calibration sequence **83d** in the transmission stream generated during regular operational use of the system **89,** without causing any interruptions or delays therein.

Accordingly, in some embodiments the control unit **82** comprises one or more processing units **82p,** a comparator module **82r** configured to compare the on-line radiation waveforms **82w** received from the digital beamforming unit **87** with the off-line radiation waveforms **83o** stored in the memory **83** *(e.g.,* by cross-correlation), and a calibration data generation module **82g** configured to analyze the comparison results from the comparator module **82r** and generate new calibration data **82c** based thereon. The calibration data generation module **82g** can be further configured to provide the new calibration data **82c** to the digital beamforming unit **87** for adjusting operation of its digital components and/or to update the calibration data records **83d** stored in the memory device **83.**

The use of relatively very large antenna array that can be scaled per user's needs, as described hereinabove, enables construction of a fully adaptive and steerable antenna system at a very low cost, weight and power consumption. This fact makes the system disclosed herein a viable solution in a variety of applications. Following are some of the possible applications. In some embodiments the beam forming chip **10/10'** is configured to carry out beam forming/steering in the digital domain (TTD) for a 16 elements' flat antenna ($4\times4$), which can be provided as a small antenna module incorporating the chip **10/10'** described hereinabove. Such embodiments can be used for various different implementations, such as, but not limited to, machine to machine (M2M) (*i.e.,* direct) communication between devices and internet of things (IoT), as described hereinbelow.

Internet of Things ("IoT")

The evolution of the Internet and the pervasive availability of communications means makes this possible to integrate various types of devices ("everything"), namely sensors, appliances, meters, security cameras and others, into a single network. This is true mainly in urban and densely populated areas where coverage of cellular systems and wireless local access networks (WLAN, Wi-Fi) is ubiquitous. In rural areas, satellites can provide the missing coverage and connect sensors and other entities to the Internet. This is applicable to areas such as agriculture, water metering, weather sensors, petrol and gas metering and the like.

The PAA described above, being of low cost and of low power consumption can be used as an antenna for IoT terminals that would make it possible for them to find, acquire and track the designated satellite automatically. This in turn provides the terminal with self-installation and tracking capabilities, which highly reduces installation costs. It also enables operating mobile applications.

An example for such terminals, is illustrated in **Fig. 9,** presenting a terminal **81** connected to water meter **82** and another terminal **83** connected and to a gas meter **84,** where both terminals are in communication with a satellite (not shown).

It should also be noted that the use of a small antenna size in these cases is possible due to the use of appropriate waveforms, as described in international patent publication No. WO 2017/017667, of the same applicant hereof and entitled "*a method and device for operating under extremely low signal to noise.* Low power consumption for such terminals can be supported by waveforms using a method as described in international patent publication No. WO 2015/173793 "*a method of exchanging communications between a satellite and terminals associated therewith",* of the same applicant hereof, which can be combined with ELSNR waveforms in order to utilize the low duty cycle in which those terminals are expected to operate.

Payload for Small Airborne Platforms

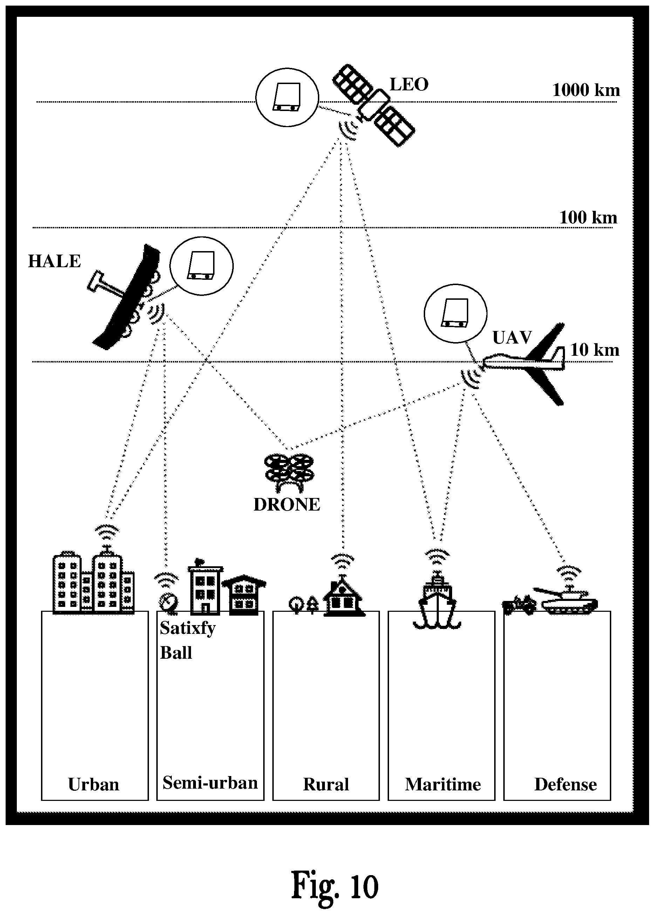

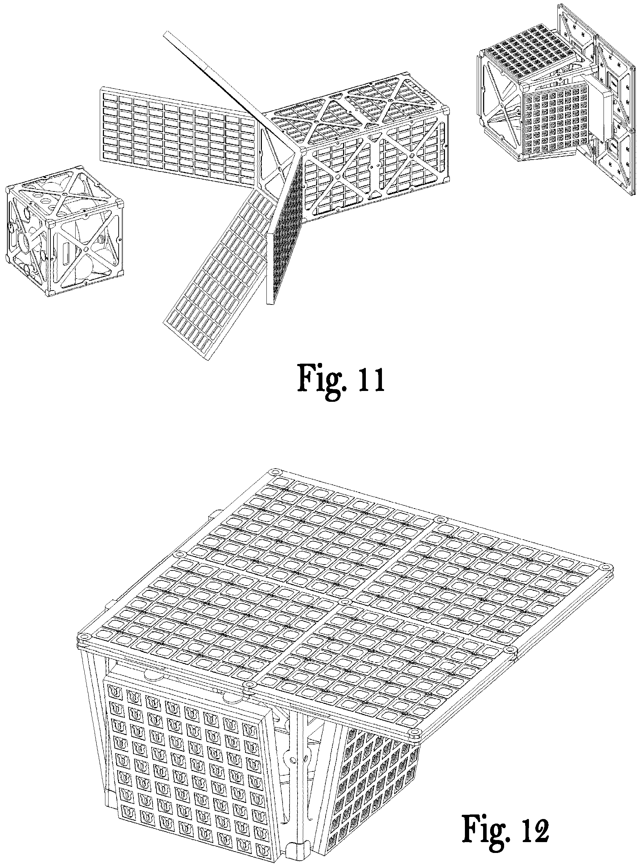

**FIG. 10,** demonstrates small airborne platforms carrying communication payloads with PAA, where a set of airborne platforms are presented, including Low Earth Orbit **(LEO)** satellites, High Altitude Long Endurance **(HALE)** solar aircraft, Unmanned Airborne Vehicle **(UAV)** and drones. Additionally very small satellites (*i.e.,* "nano-satellites"), which are typically launched to heights between 100 and 1000 km, may also be considered as suitable candidates for this application. **Figs. 11** and **12** demonstrate a schematic view of such a satellite, wherein **Fig. 11** demonstrates an example of a full satellite (having 40×10×10 cm dimensions), and **Fig. 12** illustrates its communication module in an operating state.

Each of these platforms may be configured to carry a communication payload, serving a large area on the ground. The PAA described above can be scaled according to the required constraints of the platforms in terms of link budget, array physical size, and weight and power consumption. Using a PAA on the payload enables one or more of the following capabilities:

1. Multi-beam

- A single PAA may illuminate multiple simultaneous beams to increase total throughput;
- A comprehensive solution combining beamformer, RF and antenna;

2. Beam Hopping

- Utilizing the payload power amplifiers as much as possible by illuminating the required beam according to the traffic pattern;
- Using the available frequency spectrum by avoiding simultaneous illumination of neighboring areas, thereby avoiding inter-beam interference and allowing re-use of the same frequency resources for adjacent cell;

3. Low power - The large scale of integration, reduces inherently the power consumption of the antenna array system. Typically, these systems operate at a low duty cycle mode, so when using the appropriate air interface waveform and a modem that supports it, power may be switched off at times where the PAA is not active.

4. Low weight - due to the reduced size (enabled by integration), the total weight of the whole system may be considerably reduced (up to 3 kg for a 256 elements array in Ku band).

All of the above described variations and implementations, as well as any other modifications apparent to one of ordinary skill in the art and useful for operating and calibrating the PAA by the digital beamforming chains of the beamforming chip, may be suitably employed, and are intended to fall within the scope of this disclosure.

It will further be appreciated that embodiments disclosed herein may be realized as computer executable code created using a structured programming language *(e.g.,* C), an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software. The processing may be distributed across a number of computerized devices, which may be functionally integrated into a dedicated standalone PAA system. All such permutations and combinations are intended to fall within the scope of the present disclosure.

Those of skill in the art would appreciate that items such as the various illustrative blocks, modules, elements, components, methods, operations, steps, and algorithms described herein may be implemented as hardware or a combination of hardware and computer software. To illustrate the interchangeability of hardware and software, items such as the various illustrative blocks, modules, elements, components, methods, operations, steps, and algorithms have been described generally in terms of their functionality. Whether such functionality is implemented as hardware or software depends upon the particular application and design constraints imposed on the overall system. Skilled artisans may implement the described functionality in varying ways for each particular application.

In some embodiments features of the PAA system are implemented primarily in hardware using, for example, hardware components such as application specific integrated circuits (ASICs) and/or field-programmable gated arrays (FPGAs). Implementation of the hardware state machine so as to perform the functions described herein will be apparent to persons skilled in the relevant art(s). In yet another embodiment, features of the PAA system can be implemented using a combination of both hardware and software. The software which implements aspects of the PAA system can be stored on a media. The media can be magnetic such as diskette, tape or fixed disk, or optical such as a CD-ROM. Additionally, the software can be supplied via the Internet or some type of private data network.

As described hereinabove and shown in the associated figures, the present application provides techniques for calibrating a PAA system using calibration data generated onsite during on-line operation of the system in one or more digital beamforming stages of the system. While particular embodiments of the invention have been described, it will be understood, however, that the invention is not limited thereto, since modifications may be made by those skilled in the art, particularly in light of the foregoing teachings. As will be appreciated by the skilled person, the invention can be carried out in a great variety of ways, employing more than one technique from those described above, all without exceeding the scope of the claims.

**Claims**

1. A Phased Array Antenna, PAA, (21) communication system comprising:

   an array of antenna elements ($A_i$);
   at least one digital beamforming circuitry (31t/32r) associated with at least one of said antenna elements ($A_i$);
   memory (83); and
   a control unit (82) configured and operable to

   record on-line signature of at least one antenna element of said array; said on-line signature being indicative of signals received by one or more other antenna elements ($A_i$) of said array, in response to transmission of one or more predetermined signals from said at least one antenna element during operation of the system, compare (82r) said on-line signature of the at least one antenna element with at least some portion of respective off-line signature of said at least one antenna element, which is stored in said memory (83); said off-line signature is indicative of signals received by said one or more other antenna elements ($A_i$) while the system is under idealized operational conditions, response to transmission of said one or more predetermined signals from said at least one antenna element ($A_i$) of said array (21) and receipt of the transmitted signals by said one or more other antenna elements of said array (21), generate calibration data (83d) based on the comparison between said on-line and off-line signatures, and modify parameters of one or more elements in said at least one digital beamforming circuitry (31t/32r) based on said calibration data (83d) to compensate flaws induced in the system due to artifacts in analog or digital portions of the system.

2. The system of claim 1 wherein the control unit (82) is configured and operable to carry out at least one of the following:

   cause transmission of said one or more predetermined signals from the at least one of the antenna elements ($A_i$) during the system operation and record the on-line signature received in one or more of the other antenna elements of the array (21) responsive thereto; and
   modify the parameters of one or more of the elements ($A_i$) of the at least one digital beamforming circuitry (31t/32r) based on the calibration data (83d) to compensate at least one of mutual coupling between the antenna elements ($A_i$) and non-uniform frequency response of said antenna elements ($A_i$).

3. The system of any one of the preceding claims wherein the on-line signature is responsive to signals interleaved in a transmission stream of the antenna array (21) during operation of the system without causing interruptions or delays therein.

4. The system of any one of the preceding claims wherein the at least one digital beamforming circuitry (31t/32r), the control unit (82) and memory (83), are implemented in a single integrated circuit (10) configured to transmit a data stream in a form of one or more transmission beams generated via the antenna array (21).

5. The system of claim 4 wherein the integrated circuit comprises at least one analog signal path configured to intermediate between the at least one digital beamforming circuitry (31t/32r) and the at least one antenna element ($A_i$).

6. The system of claim 5 comprising a radio frequency front end unit, RFE, connecting between one or more analog signal paths of the integrated circuit (10) and the at least one antenna element ($A_i$) and comprising at least one signal transmit path, at least one signal receive path, and at least one oscillator (35).

7. The system of claim 6 wherein the at least one signal transmit path comprises a summation unit (33s) for summing analog signals outputted by the one or more analog signal paths of the integrated circuit (10), a frequency mixer (33m) for shifting the signal outputted by said summation unit (33s) to a frequency from the oscillator (35), and at least one amplifier (33t) for amplifying the signal outputted by said frequency mixer (33m).

8. The system of claim 6 or 7 wherein the at least one signal receive path comprises at least one amplifier (34r) for amplifying signals received from at least one of the antenna elements ($A_i$), a frequency mixer (34m) for shifting the signal outputted by said at least one amplifier (34r) to a frequency from the oscillator (35), and a signal splitting network for delivering the signal outputted by the frequency mixer (34m) to one or more of the analog signal paths.

9. The system of any one of the preceding claims wherein the at least one digital beamforming circuitry (31t/32r) comprises at least one of the following:

   a true time delay unit (13) configured to affect a delay to the data stream in the digital domain;
   a digital predistorter (45) configured to adjust the data steam to compensate for nonlinearity in amplification stages of the system based at least partially on the calibration data (83d);
   a pre-equalizer (46) configured to adjust the data stream to correct non-flat frequency response of an analog channel associated with said digital beamforming circuitry (31t/32r) based at least partially on the calibration data (83d); and
   an I/Q compensator (47) configured to adjust the data stream to correct I/Q distortions based at least partially on the calibration data (83d).

10. A method of calibrating communication conducted by an antenna array (21), the method comprising:

   generating off-line signature based on signals received by one or more antenna elements ($A_i$) of said antenna array (21) under idealized operational conditions responsive to a calibration sequence transmitted by at least one other antenna element of said antenna array (21) under said idealized operational conditions;
   storing said off-line signature in a memory (83);
   recording an on-line signature based on signals received by said one or more antenna elements ($A_i$) respectively, during an operational state of the antenna array (21) responsive to transmission of said calibration sequence by said at least one other antenna element of the antenna array (21) while in said operational state;
   comparing the off-line signature obtained under said idealized conditions and the respective on-line signature obtained in said operational state;
   generating calibration data (83d) based on the comparison between said off-line and on-line signatures to calibrate said communication; and
   using the generated calibration data in digital beamforming stages.

11. The method of claim 10 comprising interleaving the transmission of the calibration sequence in the operational state in transmission stream communicated via the antenna array (21) during regular operation thereof.

12. The method of any one of claims 10 or 11 comprising using a digital beamforming process (31t/32r) to manipulate stream of data to be communicated via the antenna array (21), and using the generated calibration data (83d) to adjust said data stream in order to correct errors induced in signals communicated via said antenna array (21).

13. The method of claim 12 wherein the digital beamforming process comprises at least one of the following:

   a true time delay process (13) configured to affect a delay to the data stream in the digital domain at least partially based on the calibration data (83d) for causing a delay in respective analog signals communicated via the antenna array (21);

a complex gain process configured to affect a gain and phase shift to the data stream in the digital domain at least partially based on the calibration data (83d) as for causing a gain and phase shift in respective analog signals communicated via the antenna array (21);

a digital predistorter process (45) configured to adjust the data steam based at least partially on the calibration data (83d) in order to compensate for nonlinearity in amplification stages used by the antenna array (21);

a pre-equalizing process (46) configured to adjust the data stream based at least partially on the calibration data (83d) to correct non-flat frequency response of at least one analog channel associated with the antenna array (21); and

an I/Q compensation process (47) configured to adjust the data stream based at least partially on the calibration data (83d) in order to correct I/Q distortions of signals communicated via the antenna array (21).

14. The method of any one of claims 10 to 13 comprising storing the signature obtained under the idealized operational conditions in a memory device (83), periodically or intermittently transmitting the calibration sequence in operational states of the array (21), and generating the corresponding calibration data (83d) to calibrate the communication in a self-calibration manner.

## Patentansprüche

1. Phased-Array-Antennen-, PAA, (21) -Kommunikationssystem mit:

einer Gruppe von Antennenelementen ($A_i$);

mindestens einer digitalen Strahlformungsschaltung (31t/ 32r), die mindestens einem der Antennenelemente ($A_i$) zugeordnet ist;

Speicher (83); und

einer Steuereinheit (82), die konfiguriert und betreibbar ist, um

die Online-Signatur von mindestens einem Antennenelement der Gruppe aufzuzeichnen; wobei die Online-Signatur Signale anzeigt, die von einem oder mehreren anderen Antennenelementen ($A_i$) der Gruppe in Reaktion auf die Übertragung eines oder mehrerer vorgegebener Signale von dem mindestens einen Antennenelement während des Betriebs des Systems empfangen werden,

die Online-Signatur des mindestens einen Antennenelements mit mindestens einem Teil der jeweils in dem Speicher (83) gespeicherten Offline-Signatur des mindestens einen Antennenelements zu vergleichen (82r); wobei die Offline-Signatur Signale anzeigt, die als Reaktion auf die Übertragung des einen oder der mehreren vorgegebenen Signale von dem mindestens einen Antennenelement ($A_i$) der Gruppe (21) und den Empfang der übertragenen Signale durch das eine oder die mehreren anderen Antennenelemente der Gruppe (21) von dem einen oder den mehreren anderen Antennenelementen ($A_i$) empfangen werden, während sich das System unter idealisierten Betriebsbedingungen befindet,

Kalibrierungsdaten (83d) auf der Grundlage des Vergleichs zwischen den Online- und Offline-Signaturen zu erzeugen, und

Parameter von einem oder mehreren Elementen in der mindestens einen digitalen Strahlformungsschaltung (31t/32r) auf der Grundlage der Kalibrierungsdaten (83d) zu modifizieren, um Fehler zu kompensieren, die in dem System aufgrund von Artefakten in analogen oder digitalen Teilen des Systems entstehen.

2. System nach Anspruch 1, bei dem die Steuereinheit (82) konfiguriert und betreibbar ist, um mindestens eine der folgenden Aktionen auszuführen:

Veranlassen der Übertragung der ein oder mehreren vorgegebenen Signale von dem mindestens einen der Antennenelemente ($A_i$) während des Systembetriebs und Aufzeichnen der in einem oder mehreren der anderen Antennenelemente des Arrays (21) als Reaktion darauf empfangenen Online-Signatur; und

Modifizieren der Parameter von einem oder mehreren der Elemente ($A_i$) der mindestens einen digitalen Strahlformungsschaltung (31t/32r) auf der Grundlage der Kalibrierungsdaten (83d), um mindestens eines von gegenseitiger Kopplung zwischen den Antennenelementen ($A_i$) und ungleichmäßiger Frequenzantwort der Antennenelemente ($A_i$) zu kompensieren.

3. System nach einem der vorhergehenden Ansprüche, bei dem die Online-Signatur auf Signale anspricht, die in einem Übertragungsstrom der Antennengruppe (21) während des Betriebs des Systems verschachtelt sind, ohne Unterbrechungen oder Verzögerungen darin zu verursachen.

4. System nach einem der vorhergehenden Ansprüche, bei dem die mindestens eine digitale Strahlformungsschaltung (31t/32r), die Steuereinheit (82) und der Speicher (83) in einer einzigen integrierten Schaltung (10) implementiert sind, die konfiguriert ist, um einen Datenstrom in Form eines oder mehrerer über die Antennengruppe (21) erzeugter Sendestrahlen zu übertragen.

5. System nach Anspruch 4, bei dem die integrierte Schaltung mindestens einen analogen Signalweg umfasst, der konfiguriert ist, um zwischen der mindestens einen digitalen Strahlformungsschaltung (31t/32r) und dem mindestens einen Antennenelement ($A_i$) zu vermitteln.

6. System nach Anspruch 5 mit einer Hochfrequenz-Front-End-Einheit (RFE), die eine Verbindung zwischen ein oder mehreren analogen Signalpfaden der integrierten Schaltung (10) und dem mindestens einen Antennenelement ($A_i$) herstellt und mindestens einen Signalübertragungsweg, mindestens einen Signalempfangsweg und mindestens einen Oszillator (35) umfasst.

7. System nach Anspruch 6, bei dem der mindestens eine Signalübertragungsweg eine Summiereinheit (33s) zum Summieren von von den ein oder mehreren analogen Signalwegen der integrierten Schaltung (10) ausgegebenen analogen Signalen, einen Frequenzmischer (33m) zum Verschieben des von der Summiereinheit (33s) ausgegebenen Signals auf eine Frequenz von dem Oszillator (35) und mindestens einen Verstärker (33t) zum Verstärken des von dem Frequenzmischer (33m) ausgegebenen Signals umfasst.

8. System nach Anspruch 6 oder 7, bei dem der mindestens eine Signalempfangsweg mindestens einen Verstärker (34r) zum Verstärken von von mindestens einem der Antennenelemente ($A_i$) empfangenen Signalen, einen Frequenzmischer (34m) zum Verschieben des von dem mindestens einen Verstärker (34r) ausgegebenen Signals auf eine Frequenz von dem Oszillator (35) und ein Signalaufteilungsnetzwerk zum Liefern des von dem Frequenzmischer (34m) ausgegebenen Signals an einen oder mehrere der analogen Signalwege umfasst.

9. System nach einem der vorhergehenden Ansprüche, bei dem die mindestens eine digitale Strahlformungsschaltung (31t/32r) mindestens eines der folgenden Elemente umfasst:

   eine Echtzeitverzögerungseinheit (13), die konfiguriert ist, um dem Datenstrom im digitalen Bereich eine Verzögerung zu verleihen;
   einen digitalen Vorverzerrer (45), der konfiguriert ist, um den Datenstrom so einzustellen, dass Nichtlinearität in Verstärkungsstufen des Systems zumindest teilweise auf der Grundlage der Kalibrierungsdaten (83d) kompensiert wird;
   einen Vorentzerrer (46), der konfiguriert ist, um den Datenstrom so einzustellen, dass ein nicht flacher Frequenzgang eines der digitalen Strahlformungsschaltung (31t/32r) zugeordneten analogen Kanals zumindest teilweise auf der Grundlage der Kalibrierungsdaten (83d) korrigiert wird; und
   einen I/Q-Kompensator (47), der konfiguriert ist, um den Datenstrom so einzustellen, dass I/Q-Verzerrungen zumindest teilweise auf der Grundlage der Kalibrierungsdaten (83d) korrigiert werden.

10. Von einer Antennengruppe (21) durchgeführtes Verfahren zum Kalibrieren von Kommunikation, wobei das Verfahren umfasst:

   Erzeugen einer Offline-Signatur auf der Grundlage von von einem oder mehreren Antennenelementen ($A_i$) der Antennengruppe (21) unter idealisierten Betriebsbedingungen empfangenen Signalen als Reaktion auf eine von mindestens einem anderen Antennenelement der Antennengruppe (21) unter den idealisierten Betriebsbedingungen übertragene Kalibrierungssequenz;
   Speichern der Offline-Signatur in einem Speicher (83);
   Aufzeichnen einer Online-Signatur auf der Grundlage von von dem einen bzw. den mehreren Antennenelementen ($A_i$) während eines Betriebszustands der Antennengruppe (21) in Reaktion auf die Übertragung der Kalibrierungssequenz durch das mindestens eine andere Antennenelement der Antennengruppe (21) während des Betriebszustands empfangenen Signalen;
   Vergleichen der unter den idealisierten Bedingungen erhaltenen Offline-Signatur und der jeweils in dem Betriebszustand erhaltenen Online-Signatur;
   Erzeugen von Kalibrierungsdaten (83d) auf der Grundlage des Vergleichs zwischen den Offline- und Online-Signaturen, um die Kommunikation zu kalibrieren; und

Verwendung der erzeugten Kalibrierungsdaten in digitalen Strahlformungsstufen.

11. Verfahren nach Anspruch 10, umfassend das Verschachteln der Übertragung der Kalibrierungssequenz im Betriebszustand im über die Antennengruppe (21) während ihres regulären Betriebs übermittelten Übertragungsstrom.

12. Verfahren nach einem der Ansprüche 10 oder 11, umfassend das Verwenden eines digitalen Strahlformungsprozesses (31t/32r), um den über die Antennengruppe (21) zu übertragenden Datenstrom zu manipulieren, und Verwenden der erzeugten Kalibrierungsdaten (83d), um den Datenstrom so einzustellen, dass in den über die Antennengruppe (21) übertragenen Signalen induzierte Fehler korrigiert werden.

13. Verfahren nach Anspruch 12, bei dem der digitale Strahlformungsprozess mindestens eines umfasst von:

einem Echtzeitverzögerungsprozess (13), der konfiguriert ist, um eine Verzögerung des Datenstroms im digitalen Bereich zumindest teilweise auf der Grundlage der Kalibrierungsdaten (83d) zu beeinflussen, um eine Verzögerung in den jeweils über die Antennengruppe (21) übertragenen analogen Signalen zu verursachen; einem komplexen Verstärkungsprozess, der konfiguriert ist, um eine Verstärkung und eine Phasenverschiebung des Datenstroms im digitalen Bereich zumindest teilweise auf der Grundlage der Kalibrierungsdaten (83d) zu beeinflussen, um eine Verstärkung und eine Phasenverschiebung in den jeweils über die Antennengruppe (21) übertragenen analogen Signalen zu bewirken; einem digitalen Vorverzerrungsprozess (45), der konfiguriert ist, um den Datenstrom zumindest teilweise auf der Grundlage der Kalibrierungsdaten (83d) einzustellen, um eine Nichtlinearität in den von der Antennengruppe (21) verwendeten Verstärkungsstufen zu kompensieren; einem Vorentzerrungsprozess (46), der konfiguriert ist, um den Datenstrom zumindest teilweise auf der Grundlage der Kalibrierungsdaten (83d) einzustellen, um einen nicht flachen Frequenzgang von mindestens einem der Antennengruppe (21) zugeordneten analogen Kanal zu korrigieren; und einem I/Q-Kompensationsprozess (47), der konfiguriert ist, um den Datenstrom zumindest teilweise auf der Grundlage der Kalibrierungsdaten (83d) einzustellen, um I/Q-Verzerrungen von über die Antennengruppe (21) übertragenen Signalen zu korrigieren.

14. Verfahren nach einem der Ansprüche 10 bis 13, das das Speichern der unter den idealisierten Betriebsbedingungen erhaltenen Signatur in einer Speichervorrichtung (83), das periodische oder intermittierende Übertragen der Kalibrierungssequenz in Betriebszuständen des Arrays (21) und das Erzeugen der entsprechenden Kalibrierungsdaten (83d), um die Kommunikation selbsttätig zu kalibrieren, umfasst.

## Revendications

1. Système de communication d'antenne réseau à commande de phase (PAA) (21) comprenant :

un réseau d'éléments d'antenne ($A_i$) ; au moins un montage de circuits de mise en forme de faisceau numérique (31t/32r) associé à au moins l'un desdits éléments d'antenne ($A_i$) ; une mémoire (83) ; et une unité de commande (82) configurée et exploitable de manière à :

enregistrer une signature en ligne d'au moins un élément d'antenne dudit réseau ; ladite signature en ligne étant indicative de signaux reçus par un ou plusieurs autres éléments d'antenne ($A_i$) dudit réseau, en réponse à la transmission d'un ou plusieurs signaux prédéterminés à partir dudit au moins un élément d'antenne pendant le fonctionnement du système ; comparer (82r) ladite signature en ligne dudit au moins un élément d'antenne à au moins une partie donnée d'une signature hors ligne respective dudit au moins un élément d'antenne, qui est stockée dans ladite mémoire (83) ; dans laquelle ladite signature hors ligne est indicative de signaux reçus par ledit un ou lesdits plusieurs autres éléments d'antenne ($A_i$) tandis que le système est dans des conditions opérationnelles idéalisées, en réponse à la transmission dudit un ou desdits plusieurs signaux prédéterminés à partir dudit au moins un élément d'antenne ($A_i$) dudit réseau (21) et à la réception des signaux transmis par ledit un ou lesdits plusieurs autres éléments d'antenne dudit réseau (21) ; générer des données d'étalonnage (83d) sur la base de la comparaison entre lesdites signatures en ligne et hors ligne ; et

modifier des paramètres d'un ou plusieurs éléments dans ledit au moins un montage de circuits de mise en forme de faisceau numérique (31t/32r) sur la base desdites données d'étalonnage (83d) en vue de compenser des défauts induits dans le système en raison d'artefacts dans des parties analogiques ou numériques du système.

2. Système selon la revendication 1, dans lequel l'unité de commande (82) est configurée et exploitable de manière à mettre en œuvre au moins l'une des étapes ci-dessous consistant à :

occasionner la transmission dudit un ou desdits plusieurs signaux prédéterminés à partir dudit au moins un des éléments d'antenne (A$_i$) pendant le fonctionnement du système, et enregistrer la signature en ligne reçue dans un ou plusieurs des autres éléments d'antenne du réseau (21) en réponse à cela ; et
modifier les paramètres d'un ou plusieurs des éléments d'antenne (A$_i$) dudit au moins un montage de circuits de mise en forme de faisceau numérique (31t/32r) sur la base des données d'étalonnage (83d), en vue de compenser au moins l'un parmi un couplage mutuel entre les éléments d'antenne (A$_i$) et une réponse en fréquence non uniforme desdits éléments d'antenne (A$_i$).

3. Système selon l'une quelconque des revendications précédentes, dans lequel la signature en ligne répond à des signaux entrelacés dans un flux de transmission du réseau d'antennes (21) pendant le fonctionnement du système sans occasionner d'interruptions ou de retards dans celui-ci.

4. Système selon l'une quelconque des revendications précédentes, dans lequel ledit au moins un montage de circuits de mise en forme de faisceau numérique (31t/32r), l'unité de commande (82) et la mémoire (83), sont mis en œuvre dans un unique circuit intégré (10) configuré de manière à transmettre un flux de données sous la forme d'un ou plusieurs faisceaux de transmission générés par l'intermédiaire du réseau d'antennes (21).

5. Système selon la revendication 4, dans lequel le circuit intégré comprend au moins un chemin de signal analogique configuré de manière à servir d'intermédiaire entre ledit au moins un montage de circuits de mise en forme de faisceau numérique (31t/32r) et ledit au moins un élément d'antenne (A$_i$) .

6. Système selon la revendication 5, comprenant une unité frontale radiofréquence, RFE, se connectant entre un ou plusieurs chemins de signaux analogiques du circuit intégré (10) et ledit au moins un élément d'antenne (A$_i$), et comprenant au moins un chemin de transmission de signal, au moins un chemin de réception de signal, et au moins un oscillateur (35).

7. Système selon la revendication 6, dans lequel ledit au moins un chemin de transmission de signal comprend une unité de sommation (33s) destinée à sommer des signaux analogiques fournis en sortie par ledit un ou lesdits plusieurs chemins de signaux analogiques du circuit intégré (10), un mélangeur de fréquence (33m) destiné à décaler le signal fourni en sortie par ladite unité de sommation (33s) vers une fréquence provenant de l'oscillateur (35), et au moins un amplificateur (33t) destiné à amplifier le signal fourni en sortie par ledit mélangeur de fréquence (33m).

8. Système selon la revendication 6 ou 7, dans lequel ledit au moins un chemin de réception de signal comprend au moins un amplificateur (34r) destiné à amplifier des signaux reçus en provenance d'au moins l'un des éléments d'antenne (A$_i$), un mélangeur de fréquence (34m) destiné à décaler le signal fourni en sortie par ledit au moins un amplificateur (34r), vers une fréquence provenant de l'oscillateur (35), et un réseau de séparation de signal destiné à délivrer le signal fourni en sortie par le mélangeur de fréquence (34m) à un ou plusieurs des chemins de signaux analogiques.

9. Système selon l'une quelconque des revendications précédentes, dans lequel ledit au moins un montage de circuits de mise en forme de faisceau numérique (31t/32r) comprend au moins l'un des éléments suivants :

une unité à retard temporel réel (13) configurée de manière à affecter un retard au flux de données dans le domaine numérique ;
un module de précorrection numérique (45) configuré de manière à ajuster le flux de données afin de compenser une non-linéarité dans les étages d'amplification du système, sur la base, au moins en partie, des données d'étalonnage (83d) ;
un pré-égaliseur (46) configuré de manière à ajuster le flux de données afin de corriger une réponse en fréquence non plate d'un canal analogique associé audit montage de circuits de mise en forme de faisceau numérique (31t/32r) sur la base, au moins en partie, des données d'étalonnage (83d) ; et
un compensateur I/Q (47) configuré de manière à ajuster le flux de données afin de corriger des distorsions I/Q sur la base, au moins en partie, des données d'étalonnage (83d).

**10.** Procédé d'étalonnage d'une communication mise en œuvre par un réseau d'antennes (21), le procédé comprenant les étapes ci-dessous consistant à :

générer une signature hors ligne sur la base de signaux reçus par un ou plusieurs éléments d'antenne ($A_i$) dudit réseau d'antennes (21) dans des conditions opérationnelles idéalisées, en réponse à une séquence d'étalonnage transmise par au moins un autre élément d'antenne dudit réseau d'antennes (21) dans lesdites conditions opérationnelles idéalisées ;
stocker ladite signature hors ligne dans une mémoire (83);
enregistrer une signature en ligne sur la base de signaux reçus par ledit un ou lesdits plusieurs éléments d'antenne ($A_i$), respectivement, pendant un état opérationnel du réseau d'antennes (21), en réponse à la transmission de ladite séquence d'étalonnage par ledit au moins un autre élément d'antenne du réseau d'antennes (21) tandis qu'il est dans ledit état opérationnel ;
comparer la signature hors ligne obtenue dans lesdites conditions opérationnelles idéalisées et la signature en ligne respective obtenue dans ledit état opérationnel ; et
générer des données d'étalonnage (83d) sur la base de la comparaison entre lesdites signatures hors ligne et en ligne en vue d'étalonner ladite communication ; et
utiliser les données d'étalonnage générées dans des étages de mise en forme de faisceau numérique.

**11.** Procédé selon la revendication 10, comprenant l'étape consistant à entrelacer la transmission de la séquence d'étalonnage dans l'état opérationnel dans un flux de transmission communiqué par l'intermédiaire du réseau d'antennes (21) au cours du fonctionnement régulier de celui-ci.

**12.** Procédé selon l'une quelconque des revendications 10 et 11 comprenant l'étape consistant à utiliser un processus de mise en forme de faisceau numérique (31t/32r) pour manipuler un flux de données à communiquer par l'intermédiaire du réseau d'antennes (21), et à utiliser les données d'étalonnage générées (83d) pour ajuster ledit flux de données afin de corriger des erreurs induites dans des signaux communiqués par l'intermédiaire dudit réseau d'antennes (21).

**13.** Procédé selon la revendication 12, dans lequel le processus de mise en forme de faisceau numérique comprend au moins l'un des processus ci-dessous :

un processus de retard temporel réel (13) configuré de manière à affecter un retard au flux de données dans le domaine numérique, au moins partiellement sur la base des données d'étalonnage (83d), en vue d'occasionner un retard dans des signaux analogiques respectifs communiqués par l'intermédiaire du réseau d'antennes (21) ;
un processus de gain complexe configuré de manière à affecter un gain et un déphasage au flux de données dans le domaine numérique, au moins partiellement sur la base des données d'étalonnage (83d), en vue d'occasionner un gain et un déphasage dans des signaux analogiques respectifs communiqués par l'intermédiaire du réseau d'antennes (21) ;
un processus de précorrection numérique (45) configuré de manière à ajuster le flux de données sur la base, au moins en partie, des données d'étalonnage (83d), afin de compenser une non-linéarité dans des étages d'amplification utilisés par le réseau d'antennes (21) ;
un processus de pré-égalisation (46) configuré de manière à ajuster le flux de données sur la base, au moins en partie, des données d'étalonnage (83d), afin de corriger une réponse en fréquence non plate d'au moins un canal analogique associé au réseau d'antennes (21) ; et
un processus de compensation I/Q (47) configuré de manière à ajuster le flux de données sur la base, au moins en partie, des données d'étalonnage (83d), afin de corriger des distorsions I/Q de signaux communiqués par l'intermédiaire du réseau d'antennes (21).

**14.** Procédé selon l'une quelconque des revendications 10 à 13, comprenant l'étape consistant à stocker la signature obtenue dans les conditions opérationnelles idéalisées, dans un dispositif de mémoire (83), l'étape consistant à transmettre, de manière périodique ou intermittente, la séquence d'étalonnage dans des états opérationnels du réseau (21), et l'étape consistant à générer les données d'étalonnage correspondantes (83d) en vue d'étalonner la communication par le biais d'un auto-étalonnage.

21

A$_i$

Fig. 1

21c

I/Q output  I/Q output  I/Q output

31t

**10**

TX Beam Former 1  Control

TX Beam Former 2  Control

... 

TX Beam Former N  Control

I/Q input  I/Q input  I/Q input

32r

Control  RX Beam Former 1

Control  RX Beam Former 2

... 

Control  RX Beam Former N

... 

31i

**31**

**32**

+

... 

Baseband modulator  9t

32i  Baseband demodulator  32s  9r

Fig. 2

Fig. 3

Fig. 4

Fig. 5

Fig. 6

Fig. 7

S1

Off-line

Basic off-line
calibration

S2

Record offline signature $S_i$ of the array for
transmission of calibration sequence from
each antenna element $A_{(i,j)}$

On-line

Select an antenna element
$A_i$ during operation

S3

S4

80

Interleave the calibration sequence during
transmission from antenna element $A_i$

S5

Record on-line signature $S'_i$ of the array
and compare with off-line signature $S_i$

S8

No

All elements
tested ?

Yes

S6

$S'_i \approx S_i$
?

S9

Yes

No

S7

Combine the calibration
data into the digital
beamforming process

Generate respective
calibration data

Fig. 8A

**Fig. 8B**

**Fig. 9**

**Fig. 10**

Fig. 11

Fig. 12

**EP 3 427 417 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6346910 B
- WO 2017017667 A
- WO 2015173793 A